# EUROPEAN PATENT SPECIFICATION

(11) **EP 4 639 620 B1**
(45) Date of publication and mention of the grant of the patent: **02.12.2026**
(21) Application number: 22854520.8
(22) Date of filing: 21.12.2022
(51) Int. Cl.: F28F 13/00, C04B 35/581, F28F 13/14

(54) **THERMAL DIODE**
THERMISCHE DIODE
DIODE THERMIQUE

(43) Date of publication of application: 29.10.2025
(73) Proprietor: Luccioli, Daniele, 00172 Roma (IT); Zullo, Federico, 25136 Brescia (IT); Algamoil Green S.r.l, 41123 Modena (IT)
(72) Inventor: LUCCIOLI, Daniele, 00172 Roma (IT); ZULLO, Federico, 25136 Brescia (IT)
(74) Representative: de Alteriis, Renato
(86) International application number: PCT/IB2022/062579
(87) International publication number: WO 2024/134254

(56) References cited:
- NASO M G ET AL: "On the optimization of heat rectification in graded materials", INTERNATIONAL JOURNAL OF HEAT AND MASS TRANSFER, ELSEVIER, AMSTERDAM, NL, vol. 143, 12 August 2019 (2019-08-12), XP085816332, ISSN: 0017-9310, [retrieved on 20190812], DOI: 10.1016/J.IJHEATMASSTRANSFER.2019.118520
- SLACK G A ET AL: "The intrinsic thermal conductivity of AIN", JOURNAL OF PHYSICS AND CHEMISTRY OF SOLIDS, PERGAMON PRESS, LONDON, GB, vol. 48, no. 7, 1 January 1987 (1987-01-01), pages 641 - 647, XP024670297, ISSN: 0022-3697, [retrieved on 19870101], DOI: 10.1016/0022-3697(87)90153-3

## Description

### Field of the invention

The invention relates to a device, in particular a thermal rectifier device or thermal diode, in which heat is preferentially transmitted along a direction with respect to the reverse direction, and further relates to a method for manufacturing such a device.

### Background art

In a body made of a certain material, by placing a first end of the body at a first temperature and a second end of the body at a second temperature greater than the first temperature (direct configuration), a first heat flux from the second end to the first end is achieved.

If the body is made of a homogeneous material, when it is the first end to be placed at the higher temperature, i.e., at said second temperature, (reverse configuration) while the second end is at the lower temperature (i.e., at said first temperature), a second heat flux is achieved, which is substantially equal to the first heat flux, except that it has opposite direction with respect to said first heat flux.

However, for many technical applications, it would be advantageous to have a body made so that the first heat flux and the second heat flux are substantially different from each other, in particular so that one of the two heat fluxes is substantially greater than the other heat flux. In other words, it would be advantageous to have a body in which the heat flux in the direct configuration is substantially greater than the heat flux in the reverse configuration.

A method for obtaining such a body is not trivial.

US2016/195344A1, US3754594A, US9656920B2 and M.C. Naso et al. (International Journal of Heat and Mass Transfer 143 (2019) 118520) can be useful for understanding the present invention.

### Summary of the invention

It is an object of the present invention to provide a method for manufacturing a thermal rectifier device, or thermal diode, in which heat is preferentially transmitted along a direction with respect to the reverse direction.

The present invention achieves at least the aforesaid object, and other objects which will be apparent in the light of the present description, by a method for manufacturing a thermal rectifier device comprising a body having a first end and a second end, opposite to each other;
wherein the method includes creating a plurality of pores in the body, so that the body has a porosity *Φ* in a region of the body, the porosity *Φ* being defined as the ratio of the total volume of the pores in said region to the total volume of the region,
wherein the trend of the porosity *Φ* and the radius r of the pores are determined as follows:
   a) selecting a first temperature value T1 and a second temperature value T2, with T1>T2, each to be applied to a respective one of said ends of the body;
   b) drawing a rectangle on a plane T-x, where T is the ordinate axis and x is the abscissa axis;
      the vertices of said rectangle having the following coordinates: $\left(T={T}_{1}, x=0\right) , \left(T={T}_{2}, x=0\right) , \left(T={T}_{1}, x=1\right) , \left(T={T}_{2}, x=1\right) ;$
   c) considering the following thermal conductivity formula *λₜₒₜ = λ*(*T*)*F*(*r, ϕ*, *T*) with *λ (T)* = thermal conductivity as a function of the temperature T of the material of which the body is made, in the absence of said plurality of pores;
      and F is a corrective factor due to the presence of said plurality of pores, in which $F = \frac{1}{\frac{1}{{\left(1-ϕ\right)}^{3}} + \frac{9}{2} {\left(\frac{l \left(T\right)}{r}\right)}^{2} ϕ \left(1+3\sqrt{\frac{ϕ}{2}}\right)}$
      where *l*(*T*) is a factor which solely depends on the temperature;
   d) using the aforesaid conductivity formula *λₜₒₜ,* calculating the following differences in thermal conductivity, with r and *Φ* as a function of x:
      d1) 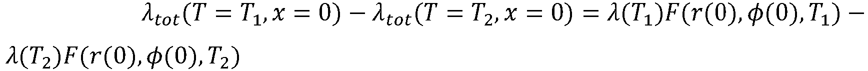 λtot(T = T1, x = 0) - λtot(T = T2, x = 0) = λ(T1)F(r(0), ϕ(0), T1) - λ(T2)F(r(0), ϕ(0), T2)
      d2) $\begin{matrix}{λ}_{tot} \left(T=\frac{3 {T}_{1} + {T}_{2}}{4},x=\frac{1}{4}\right) - {λ}_{tot} \left(T=\frac{3 {T}_{2} + {T}_{1}}{4},x=\frac{1}{4}\right) = \\ λ \left(\frac{3 {T}_{1} + {T}_{2}}{4}\right) F \left(r\left(\frac{1}{4}\right),ϕ\left(\frac{1}{4}\right),\frac{3 {T}_{1} + {T}_{2}}{4}\right) - λ \left(\frac{3 {T}_{2} + {T}_{1}}{4}\right) F \left(r\left(\frac{1}{4}\right),ϕ\left(\frac{1}{4}\right),\frac{3 {T}_{2} + {T}_{1}}{4}\right)\end{matrix}$
      d3) $\begin{matrix}{λ}_{tot} \left(T=\frac{3 {T}_{2} + {T}_{1}}{4},x=\frac{3}{4}\right) - {λ}_{tot} \left(T=\frac{3 {T}_{1} + {T}_{2}}{4},x=\frac{3}{4}\right) = \\ λ \left(\frac{3 {T}_{2} + {T}_{1}}{4}\right) F \left(r\left(\frac{3}{4}\right),ϕ\left(\frac{3}{4}\right),\frac{3 {T}_{2} + {T}_{1}}{4}\right) - λ \left(\frac{3 {T}_{1} + {T}_{2}}{4}\right) F \left(r\left(\frac{3}{4}\right),ϕ\left(\frac{3}{4}\right),\frac{3 {T}_{1} + {T}_{2}}{4}\right)\end{matrix}$
      d4) 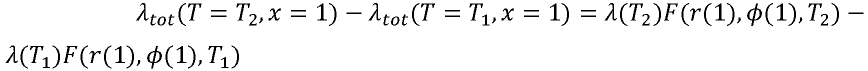 λtot(T = T2, x = 1) - λtot(T = T1, x = 1) = λ(T2)F(r(1), ϕ(1), T2) - λ(T1)F(r(1), ϕ(1), T1)
   e) for each of equations d1) and d4), finding the values of the corresponding pairs *(r(0), ϕ*(0)), *(r(1), ϕ*(1)) which maximize the modulus of the differences;
   f) for equation d2), selecting the values of (r(0.25), *ϕ*(0.25)) so that the difference in d2) is k times the difference in d1), where k is between 0.3 and 0.7;
   g) for equation d3), selecting the values of (*r*(0.75), *ϕ*(0.75)) so that the difference in d3) is k times the difference in d4), where k is between 0.3 and 0.7;
      whereby, in particular by means of steps e), f) and g), the values of *r(x)* and *ϕ*(x) are obtained at the points having an abscissa *x =* 0, $x = \frac{1}{4} , x = \frac{3}{4}$, *x* = 1;
   h) performing a linear interpolation of said values of *r(x)* and *ϕ*(x) in the points having abscissa *x =* 0, $x = \frac{1}{4} , x = \frac{3}{4}$, *x* = 1, to obtain the trend of the porosity *Φ* and radius r of the pores along the abscissa x.

The invention further relates to a thermal rectifier device, or thermal diode, in particular made by the aforesaid method.

Advantageously, the device has features such that the heat is preferentially transmitted along a direction with respect to the reverse direction.

Therefore, the device is a rectifier or thermal rectifier device, or thermal diode.

A thermal rectifier can be considered the thermal analog of an electric diode.

The invention is applied to various fields, including: thermal control, cooling, energy collection, thermal insulation, radiation detection, quantum information, phononics, coherent caloritronics.

The device of the invention can be used in a wide range of thermal devices, including thermal motors, chillers, thermal regulators of buildings, thermal logic devices. Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Fig. 1 diagrammatically shows a device according to the invention, in a first condition (in particular in a direct condition or configuration);
Fig. 2 diagrammatically shows the device in Fig. 1, in a second condition (in particular in a reverse condition or configuration);
Fig. 3 shows the creation of a rectangle on a plane T-x, according to a step of the method of the invention;
Fig. 4 shows a linear interpolation of values of *r(x);*
Fig. 5 shows a linear interpolation of values of *ϕ*(*x*);
Fig. 6 shows a graph related to features of a device according to the invention;
Fig. 7 shows two other graphs related to features of a device according to the invention.

The same elements or components have the same reference numeral.

### Description of exemplary embodiments of the invention

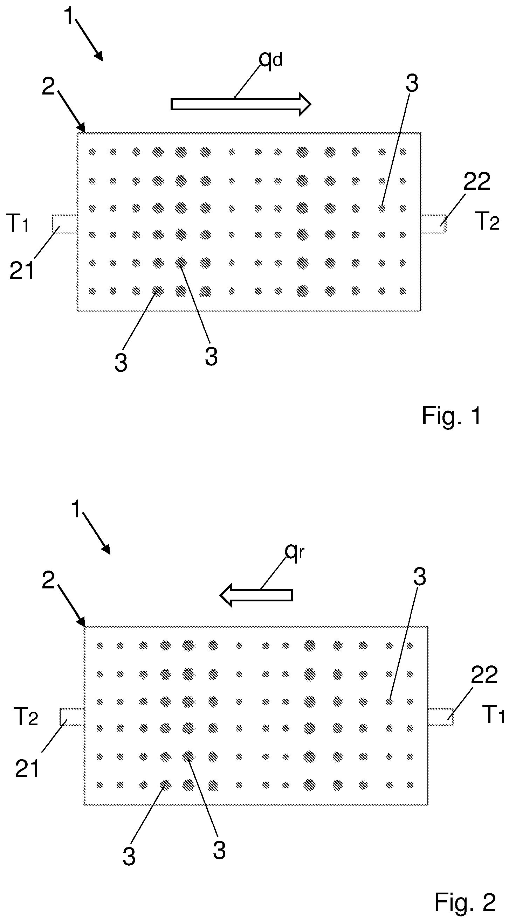

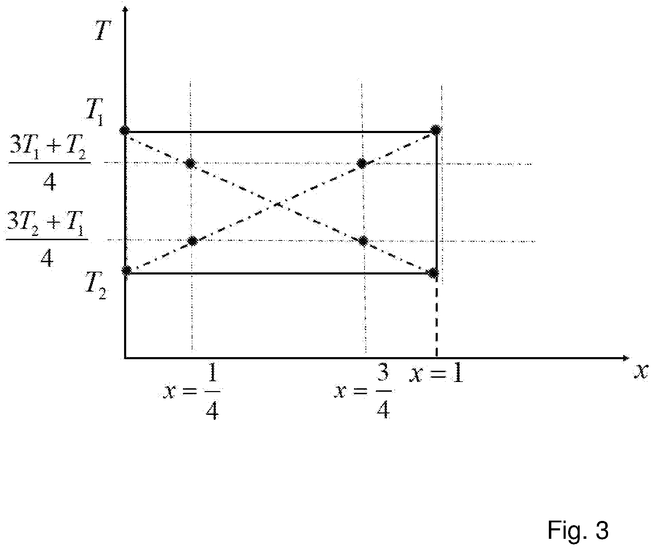

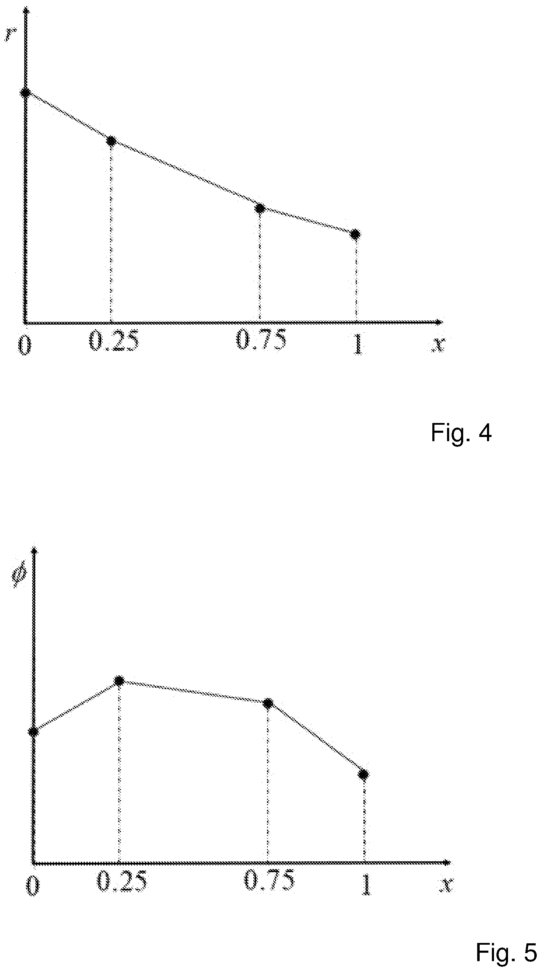

With reference to the Figures, there is described a method for manufacturing a thermal rectifier device 1, or thermal rectifier or thermal diode, comprising a body 2 having a first end 21 and a second end 22, opposite to each other;
wherein the method includes creating a plurality of pores 3 or holes (only some of the pores are indicated in Figures 1 and 2) in the body 2, so that the body 2 has a porosity *Φ* in a region of the body 2, the porosity *Φ* being defined as the ratio between the total volume of the pores 3 (i.e., the sum of the volumes of all the pores) in said region and the total volume of the region,
wherein the trend of the porosity *Φ* and the radius r of the pores 3 are determined as follows:
   a) selecting a first temperature value T1 and a second temperature value T2, with T1 > T2, each to be applied to a respective one of said two ends 21, 22 of the body 2;
   b) drawing a rectangle on a plane T-x (Fig. 3), where T is the ordinate axis and x is the abscissa axis;
      the vertices of said rectangle having the following coordinates: $\left(T={T}_{1}, x=0\right) , \left(T={T}_{2}, x=0\right) , \left(T={T}_{1}, x=1\right) , \left(T={T}_{2}, x=1\right) ;$
   c) considering the following thermal conductivity formula *λₜₒₜ* = *λ*(*T*)*F*(*r, ϕ*, *T*), which describes the variation of thermal conductivity with the porosity *ϕ* and the radius r of the pores 3,
      with *λ (T)* = thermal conductivity as a function of the temperature T of the material of which the body 2 is made, in the absence of said plurality of pores 3;
      and F is a corrective factor due to the presence of said plurality of pores 3, in which $F = \frac{1}{\frac{1}{{\left(1-ϕ\right)}^{3}} + \frac{9}{2} {\left(\frac{l \left(T\right)}{r}\right)}^{2} ϕ \left(1+3\sqrt{\frac{ϕ}{2}}\right)}$
      where *l*(*T*) is a factor which solely depends on the temperature;
   d) using the aforesaid conductivity formula *λₜₒₜ,* calculating the following differences in thermal conductivity, with r and *Φ* as a function of x:
      d1) 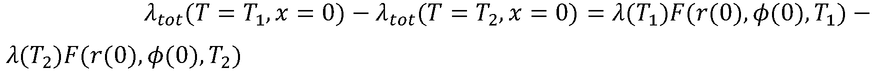 λtot(T = T1, x = 0) - λtot(T = T2, x = 0) = λ(T1)F(r(0), ϕ(0), T1) - λ(T2)F(r(0), ϕ(0), T2)
      d2) $\begin{matrix}{λ}_{tot} \left(T=\frac{3 {T}_{1} + {T}_{2}}{4},x=\frac{1}{4}\right) - {λ}_{tot} \left(T=\frac{3 {T}_{2} + {T}_{1}}{4},x=\frac{1}{4}\right) = \\ λ \left(\frac{3 {T}_{1} + {T}_{2}}{4}\right) F \left(r\left(\frac{1}{4}\right),ϕ\left(\frac{1}{4}\right),\frac{3 {T}_{1} + {T}_{2}}{4}\right) - λ \left(\frac{3 {T}_{2} + {T}_{1}}{4}\right) F \left(r\left(\frac{1}{4}\right),ϕ\left(\frac{1}{4}\right),\frac{3 {T}_{2} + {T}_{1}}{4}\right)\end{matrix}$
      d3) $\begin{matrix}{λ}_{tot} \left(T=\frac{3 {T}_{2} + {T}_{1}}{4},x=\frac{3}{4}\right) - {λ}_{tot} \left(T=\frac{3 {T}_{1} + {T}_{2}}{4},x=\frac{3}{4}\right) = \\ λ \left(\frac{3 {T}_{2} + {T}_{1}}{4}\right) F \left(r\left(\frac{3}{4}\right),ϕ\left(\frac{3}{4}\right),\frac{3 {T}_{2} + {T}_{1}}{4}\right) - λ \left(\frac{3 {T}_{1} + {T}_{2}}{4}\right) F \left(r\left(\frac{3}{4}\right),ϕ\left(\frac{3}{4}\right),\frac{3 {T}_{1} + {T}_{2}}{4}\right)\end{matrix}$
      d4) $\begin{matrix}{λ}_{tot} \left(T={T}_{2},x=1\right) - {λ}_{tot} \left(T={T}_{1},x=1\right) = λ \left({T}_{2}\right) F \left(r\left(1\right),ϕ\left(1\right),{T}_{2}\right) - \\ λ \left({T}_{1}\right) F \left(r\left(1\right),ϕ\left(1\right),{T}_{1}\right) ;\end{matrix}$
   e) for each of equations d1) and d4), finding the values of the corresponding pairs *(r(0), ϕ*(0)), (r(1), *ϕ*(1)) which maximize the modulus of the differences; this can be done numerically, but it is preferable to compare the maximum obtained with a graphical representation of the function of the variables (r, *ϕ*) to have a range of values for the pairs;
   f) for equation d2), selecting the values of (r(0.25), *ϕ*(0.25)) so that the difference in d2) is k times the difference in d1), where k is between 0.3 and 0.7; this because the difference in the intersection of the diagonals is zero and thus the difference in d2 should be less than the difference in d1);
   g) for equation d3), selecting the values of (*r*(0.75), *ϕ*(0.75)) so that the difference in d3) is k times the difference in d4), where k is between 0.3 and 0.7;
      whereby, in particular by means of steps e), f) and g), the values of *r(x)* and *ϕ*(*x*) are obtained at the points having an abscissa *x =* 0, $x = \frac{1}{4} , x = \frac{3}{4}$, x = 1;
   h) performing a linear interpolation (Fig. 4 and Fig. 5) of said values of *r(x)* and *ϕ*(*x*) in the points having abscissa *x =* 0, $x = \frac{1}{4} , x = \frac{3}{4}$, x = 1, to obtain the trend of the porosity *Φ* and radius r of the pores along the abscissa x.

In particular, x=0 corresponds to the position of the first end 21 of the body 2, and x=1 corresponds to the position of the second end 22 of the body 2.

It is particularly preferable that the results of the differences in d1), d2), d3) and d4) have the same sign, in particular all positive or all negative.

The aforesaid dependence of *l*(*T*) on the temperature T, in particular when the body 2 is made of semiconductor material, is expressed as follows: $l = {β}_{0} \frac{{\int }_{0}^{\frac{{θ}_{D}}{T}} \frac{{x}^{4} {e}^{x}}{{\left({e}^{x}-1\right)}^{2} \left({A}_{1}{x}^{4}{T}^{4}+{A}_{2}{x}^{2}{T}^{5}+{A}_{3}\right)}}{{\int }_{0}^{\frac{{θ}_{D}}{T}} \frac{{x}^{4} {e}^{x}}{{\left({e}^{x}-1\right)}^{2}}}$ where *θ_{D}* is the Debye temperature of the material of which the body 2 is made, and β₀, A₁, A₂ and A₃ are characteristic constant values of said material.

Preferably, said value T1 is equal to 300K and said value T2 is equal to 100K.

Said body 2 is preferably made of a porous crystalline semiconductor material, or a porous metal.

It is particularly preferred that said body 2 is made of aluminum nitride.

The porosity *Φ* is preferably variable with the space inside the body 2, in particular variable in said region of the body 2.

Preferably, some of the pores have the same radius, and other pores have different radius from each other.

The invention further relates to a thermal rectifier device 1, or thermal diode. Advantageously, the device 1 has a rectification coefficient R greater than 1, preferably greater than or equal to 2.

The rectification coefficient R is defined as follows: $R = \frac{\left|{q}_{d}\right|}{\left|{q}_{r}\right|}$ where q_{d} is the heat flux between the two ends 21, 22 of the body 2 when the first end 21 is at the temperature T1 and the second end 22 is at the temperature T2 (direct configuration, Fig. 1), and qᵣ is the heat flux between the two ends 21, 22 of the body 2 when the first end 21 is at the temperature T2 and the second end 22 is at the temperature T1 (reverse configuration, Fig. 2).

Advantageously, the aforesaid method allows obtaining an optimal rectification coefficient R.

The value of the thermal conductivity and the variation thereof with the diameter of the pores and the number of pores per unit volume is decisive for obtaining values of R significantly different from 1.

One of the ideas underlying the present invention is that to obtain a good thermal rectifier, it is important that the thermal conductivity varies both inside the body 2 and with the temperature values. Given a specific material and a distribution of pores and porosity, the suitable temperature range for the proper operation of the device 1 must be sought. For semiconductor and metal materials, it is well known how thermal conductivity varies with temperature. The main causes of heat conduction are the transport capabilities of phonons and electrons. For phonons, it is possible to assume a contribution to thermal conductivity given by: ${λ}_{p} = {αT}^{3} {\int }_{0}^{\frac{{θ}_{D}}{T}} \frac{{x}^{4} {e}^{x}}{{\left({e}^{x}-1\right)}^{2} \left({A}_{1}{x}^{4}{T}^{4}+{A}_{2}{x}^{2}{T}^{5}+{A}_{3}\right)}$

Where *θ_{D}* is the Debye temperature of the material and the other constants are peculiar to the material considered. For electrons, the contribution to thermal conductivity is of the type ${λ}_{e} = βT \left(1+B{\left(1+\frac{C}{T}\right)}^{2}\right)$ where the parameters B and C can also be temperature dependent. The distribution of the pore diameter inside the material, the features of the material and the variable porosity are decisive for maximizing the value of the rectification coefficient R and thus for obtaining a thermal rectifier with high capacities.

Once the operating temperature range of the device 1 has been set, say [T1,T2] with T1 > T2, if the material is homogeneous and without pores, the temperature, in the direct (end 21 at T1 and end 22 at T2, Fig. 1) and reverse configurations (end 21 at T2 and end 22 at T1, Fig. 2), would distribute at equilibrium, in the plane (T,x), exactly on the diagonals of the rectangle the vertices of which are (T1,0), (T2,0), (T1,1) (T2,1). Here x is the dimensionless coordinate X/L, where X is the coordinate along the two ends of the body 2, and L is the length of the body 2, in particular from the first end 21 to the second end 22.

In the case of non-homogeneous material, the temperature distribution does not lie exactly on the diagonals but neither does it deviate therefrom in a considerable manner. If the thermal conductivity values, function of T and x through the variable porosity and the variable radius, are significantly different along the two diagonals ${T}_{2} + \left({T}_{1}-{T}_{2}\right) x$ and ${T}_{1} - \left({T}_{1}-{T}_{2}\right) x ,$ a rectifying effect of the device 1 will be obtained.

Integral values in the aforesaid formulas describing *λₚ* and *l*(*T*) can also be approximated by analytical formulas. In particular, the formula describing *λₚ* for temperature values greater than the temperature determined by the maximum value of *λₚ*, can be approximated by the formula: ${λ}_{p} \approx \frac{{α}_{1}}{\sqrt{{T}^{3} + {α}_{2}}} - {α}_{3} + {α}_{4} {T}^{3}$ where the constants *αᵢ, i* = 1..4 are determined by comparing the experimental values of thermal conductivity at four temperature points in the range [T₁,T₂]. Therefore, it is necessary to resolve the system ${λ}_{p} \left(T={T}_{i}\right) = \frac{{α}_{1}}{\sqrt{{T}_{i}^{3} + {α}_{2}}} - {α}_{3} + {α}_{4} {T}_{i}^{3} , i = 1 .. 4$

Where *λₚ*(*T = Tᵢ*) are the experimental values of thermal conductivity at the considered temperature points.

The integral at the denominator of the formula of *l*(*T*) can instead be approximated by: ${\int }_{0}^{\frac{{θ}_{D}}{T}} \frac{{x}^{4} {e}^{x}}{{\left({e}^{x}-1\right)}^{2}} \approx \frac{4}{15} {π}^{4} - \left(24+24θ+12{θ}^{2}+4{θ}^{3}+{θ}^{4}\right) {e}^{- θ} - \left(\begin{matrix}\frac{3}{2} + 3 θ + 3 {θ}^{2} + 2 {θ}^{3} \\ + {θ}^{4}\end{matrix}\right) {e}^{- 2 θ}$ where $θ = \frac{{θ}_{D}}{T}$.

Therefore, one idea underlying the invention is that along the two diagonals of the aforesaid rectangle, the values of thermal conductivity must be significantly different.

Therefore, the aforesaid four different reference pairs are taken, spaced apart along the diagonals, as in Fig. 3.

At least four pairs of points are considered on the diagonals of the rectangle (with reference to the aforesaid points d), d1), d2), d3), d4)).

The points of each pair have the same abscissa x, and points of different pairs have mutually different abscissa.

In particular, one pair has abscissa x=0 and another pair has abscissa x=1. The abscissae of the other two or more pairs are different from each other, and are between 0 and 1.

In a particular example, the aforesaid method is applied to manufacture a device 1 in which the body 2 is made of aluminum nitride.

Aluminum nitride has excellent electrical conductivity properties and is taken as an example to show how the method described can lead to a thermal diode with certain performances. Experimental values of thermal conductivity can be found for example in Slack, G.A., Tanzilli R.A., Pohl R.O., Vandersande J. W., J. Phys. Chem. Solids 48, 7 (1987), 641-647*.* The Debye temperature value for this material is equal to 980K. We set the values [T₁,T₂] =[100K, 300K] as the operating range of the diode. From the experimental values reported in Slack, G.A., Tanzilli R.A., Pohl R.O., Vandersande J. W., J. Phys. Chem. Solids 48, 7 (1987), 641-647*,* the following function is obtained for *λₚ* ${λ}_{p} \approx \frac{3.667 ⋅ {10}^{6}}{\sqrt{{T}^{3} - 525505}} - 632 + 8.87 ⋅ {10}^{- 6} {T}^{3}$

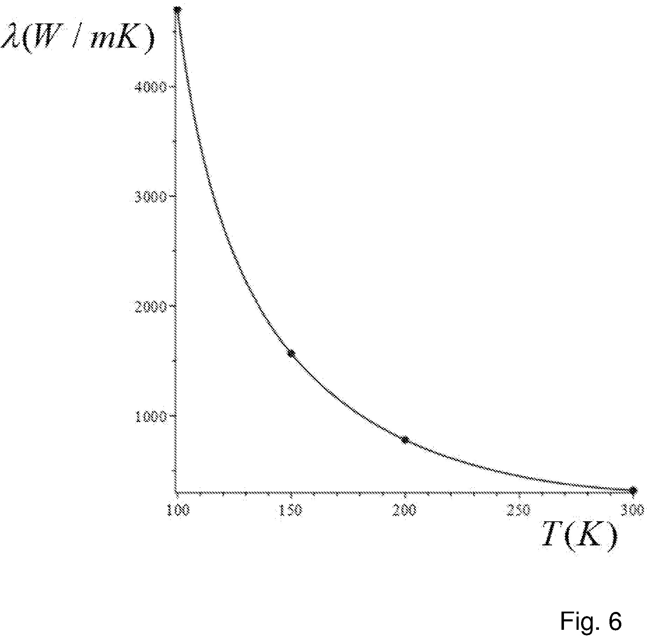

The graph of the λₚ function shown above, compared with the four experimental points in T=100K, 150K, 200K and 300K, is shown in the following graph in Fig. 6.

The values of (*r*(0), *ϕ*(0)), (r(1), *ϕ*(1)), *r*(0.25), *ϕ*(0.25) and *r*(0.75), *ϕ*(0.75) found by the method of the invention are: $\left(\left(r\left(0\right),ϕ\left(0\right)\right)\right. = \left({10}^{- 7}m, 0.002\right)$ $\left(r\left(1\right),ϕ\left(1\right)\right) = \left({10}^{- 3}m, 0.05\right)$ $\left(r\left(0.25\right),ϕ\left(0.25\right)\right) = \left(7⋅{10}^{- 7},0.02\right)$ $\left(r\left(0.75\right),ϕ\left(0.75\right)\right) = \left({10}^{- 3}, 0.035\right)$

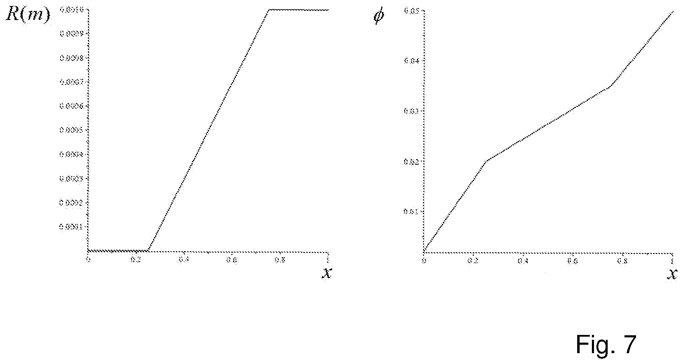

These values are shown in the graphs in Fig. 7 along with the linear interpolations. The value of the heat flux q_{d} which is obtained in the direct configuration (Fig. 1) is equal to 101800 W/m², while in the reverse configuration (Fig. 2) the heat flux q_{d} has a value equal to 40500 W/m². In this case, the rectification coefficient R is thus approximately 2.51.

## Claims

1. A method for manufacturing a thermal rectifier device (1) comprising a body (2) having a first end (21) and a second end (22), opposite to each other;
wherein the method includes creating a plurality of pores (3) in the body (2), so that the body (2) has a porosity *Φ* in a region of the body (2), the porosity *Φ* being defined as the ratio of the total volume of the pores (3) in said region to the total volume of the region,
the method being **characterized in that** the trend of the porosity *Φ* and the radius r of the pores (3) are determined as follows:
a) selecting a first temperature value T1 and a second temperature value T2, with T1> T2, each to be applied to a respective one of said ends (21, 22) of the body (2);
b) drawing a rectangle on a plane T-x, where T is the ordinate axis and x is the abscissa axis; the vertices of said rectangle having the following coordinates:
(T=T₁, x=0), (T=T₂, x=0), (T=T₁, x=1), (T=T₂, x=1);
c) considering the following thermal conductivity formula *λₜₒₜ = λ*(*T*)*F*(*r, ϕ, T)* with *λ (T)* = thermal conductivity as a function of the temperature T of the material of which the body (2) is made, in the absence of said plurality of pores (3);
and F is a corrective factor due to the presence of said plurality of pores (3), wherein $F = \frac{1}{\frac{1}{{\left(1-ϕ\right)}^{3}} + \frac{9}{2} {\left(\frac{l \left(T\right)}{r}\right)}^{2} ϕ \left(1+3\sqrt{\frac{ϕ}{2}}\right)}$
where *l*(*T*) is a factor which solely depends on the temperature;
d) using the aforesaid conductivity formula *λₜₒₜ,* calculating the following differences in thermal conductivity, with r and *Φ* as a function of x:
d1) 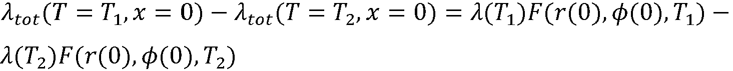 λtot(T = T1, x = 0) - λtot(T = T2, x = 0) = λ(T1)F(r(0), ϕ(0), T1) - λ(T2)F(r(0), ϕ(0), T2)
d2) $\begin{matrix}{λ}_{tot} \left(T=\frac{3 {T}_{1} + {T}_{2}}{4},x=\frac{1}{4}\right) - {λ}_{tot} \left(T=\frac{3 {T}_{2} + {T}_{1}}{4},x=\frac{1}{4}\right) = \\ λ \left(\frac{3 {T}_{1} + {T}_{2}}{4}\right) F \left(r\left(\frac{1}{4}\right),ϕ\left(\frac{1}{4}\right),\frac{3 {T}_{1} + {T}_{2}}{4}\right) - λ \left(\frac{3 {T}_{2} + {T}_{1}}{4}\right) F \left(r\left(\frac{1}{4}\right),ϕ\left(\frac{1}{4}\right),\frac{3 {T}_{2} + {T}_{1}}{4}\right)\end{matrix}$
d3) $\begin{matrix}{λ}_{tot} \left(T=\frac{3 {T}_{2} + {T}_{1}}{4},x=\frac{3}{4}\right) - {λ}_{tot} \left(T=\frac{3 {T}_{1} + {T}_{2}}{4},x=\frac{3}{4}\right) = \\ λ \left(\frac{3 {T}_{2} + {T}_{1}}{4}\right) F \left(r\left(\frac{3}{4}\right),ϕ\left(\frac{3}{4}\right),\frac{3 {T}_{2} + {T}_{1}}{4}\right) - λ \left(\frac{3 {T}_{1} + {T}_{2}}{4}\right) F \left(r\left(\frac{3}{4}\right),ϕ\left(\frac{3}{4}\right),\frac{3 {T}_{1} + {T}_{2}}{4}\right)\end{matrix}$
d4) 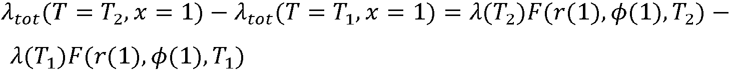 λtot(T = T2, x = 1) - λtot(T = T1, x = 1) = λ(T2)F(r(1), ϕ(1), T2) - λ(T1)F(r(1), ϕ(1), T1)
e) for each of equations d1) and d4), finding the values of the corresponding pairs (*r*(0),*ϕ*(0)), (*r*(1),*ϕ*(1)) which maximize the modulus of the differences;
f) for equation d2), selecting the values of (r(0.25), *ϕ*(0.25)) so that the difference in d2) is k times the difference in d1), where k is between 0.3 and 0.7;
g) for equation d3), selecting the values of (*r*(0.75), *ϕ*(0.75)) so that the difference in d3) is k times the difference in d4), where k is between 0.3 and 0.7;
whereby, in particular by means of steps e), f) and g), the values of r(x) and *ϕ*(*x*) are obtained at the points having an abscissa *x =* 0, $x = \frac{1}{4} , x = \frac{3}{4}$, *x* = 1;
h) performing a linear interpolation of said values of r(x) and *ϕ*(*x*) in the points having abscissa *x =* 0, $x = \frac{1}{4} , x = \frac{3}{4}$, *x* = 1, to obtain the trend of the porosity *Φ* and radius r of the pores (3) along the abscissa x.

2. A method according to claim 1, wherein x=0 corresponds to the position of the first end (21) of the body (2), and x=1 corresponds to the position of the second end (22) of the body (2).

3. A method according to claim 1 or 2, wherein the results of the differences in d1), d2), d3) and d4) have the same sign, in particular wherein the results of said differences are all positive or all negative.

4. A method according to any one of the preceding claims, wherein the dependence of *l*(*T*) on the temperature T, in particular when the body (2) is made of a semiconductor material, is expressed as follows: $l = {β}_{0} \frac{{\int }_{0}^{\frac{{θ}_{D}}{T}} \frac{{x}^{4} {e}^{x}}{{\left({e}^{x}-1\right)}^{2} \left({A}_{1}{x}^{4}{T}^{4}+{A}_{2}{x}^{2}{T}^{5}+{A}_{3}\right)}}{{\int }_{0}^{\frac{{θ}_{D}}{T}} \frac{{x}^{4} {e}^{x}}{{\left({e}^{x}-1\right)}^{2}}}$ where *θ_{D}* is the Debye temperature of the material of which the body (2) is made, and β₀, A₁, A₂ and A₃ are constant values characteristic of said material.

5. A method according to any one of the preceding claims, wherein said body (2) is made of a crystalline semiconductor material, in particular porous; or of a metal, in particular porous.

6. A method according to any one of the preceding claims, wherein said body (2) is made of aluminum nitride.

7. A method according to any one of the preceding claims, wherein said value T₁ is equal to 300 K and said value T₂ is equal to 100 K.

8. A thermal rectifier device (1) comprising a body (2) having a first end (21) and a second end (22), opposite to each other;
wherein the body (2) has a plurality of pores (3), so that the body (2) has a porosity *Φ* in a region of the body (2), the porosity *Φ* being defined as the ratio of the total volume of the pores (3) in said region to the total volume of the region;
wherein the trend of the porosity *Φ* and the radius r of the pores (3) are determined according to the method according to any one of the preceding claims.

9. A thermal rectifier device (1) according to claim 8, having a rectification coefficient R greater than 1, preferably greater than or equal to 2;
the rectification coefficient R being: $R = \frac{\left|{q}_{d}\right|}{\left|{q}_{r}\right|}$
where q_{d} is the heat flux between the two ends (21, 22) of the body (2) when the first end (21) is at the temperature T1 and the second end (22) is at the temperature T2,
and qᵣ is the heat flux between the two ends (21, 22) of the body (2) when the first end (21) is at the temperature T2 and the second end (22) is at the temperature T1.

10. A thermal rectifier device (1) according to claim 8 or 9, wherein said body (2) is made of aluminum nitride.

## Patentansprüche

1. Verfahren zum Herstellen einer thermischen Gleichrichtervorrichtung (1), umfassend einen Körper (2) mit einem ersten Ende (21) und einem zweiten Ende (22), die einander gegenüberliegen;
wobei das Verfahren das Erzeugen einer Vielzahl von Poren (3) in dem Körper (2) umfasst, so dass der Körper (2) eine Porosität *Φ* in einem Bereich des Körpers (2) aufweist, wobei die Porosität *Φ* als das Verhältnis des Gesamtvolumens der Poren (3) in dem Bereich zu dem Gesamtvolumen des Bereichs definiert ist,
wobei das Verfahren **dadurch gekennzeichnet ist, dass** der Verlauf der Porosität *Φ* und der Radius r der Poren (3) wie folgt bestimmt werden:
a) Auswählen eines ersten Temperaturwertes T1 und eines zweiten Temperaturwertes T2, wobei T1 > T2, die jeweils an einem jeweiligen der Enden (21, 22) des Körpers (2) anzulegen sind;
b) Zeichnen eines Rechtecks in einer Ebene T-x, wobei T die Ordinatenachse und x die Abszissenachse ist;
wobei die Eckpunkte des Rechtecks die folgenden Koordinaten aufweisen: $\left(T={T}_{1}, x=0\right) , \left(T={T}_{2}, x=0\right) , \left(T={T}_{1}, x=1\right) , \left(T={T}_{2}, x=1\right) ;$
c) Berücksichtigen der folgenden Wärmeleitfähigkeitsformel *λₜₒₜ = λ(T)F(r, ϕ, T),* wobei *λ (T)* = Wärmeleitfähigkeit als Funktion der Temperatur T des Materials, aus dem der Körper (2) besteht, in Abwesenheit der Vielzahl von Poren (3);
und F ein Korrekturfaktor aufgrund des Vorhandenseins der Vielzahl von Poren (3) ist, wobei $F = \frac{1}{\frac{1}{{\left(1-ϕ\right)}^{3}} + \frac{9}{2} {\left(\frac{l \left(T\right)}{r}\right)}^{2} ϕ \left(1+3\sqrt{\frac{ϕ}{2}}\right)}$
wobei *l(T)* ein Faktor ist, der ausschließlich von der Temperatur abhängt;
d) Berechnen der folgenden Differenzen der Wärmeleitfähigkeit unter Verwendung der vorgenannten Leitfähigkeitsformel *λₜₒₜ,* mit rund *Φ* als Funktion von x:
d1) 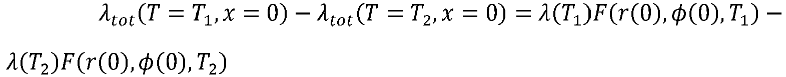 λtot(T = T1, x = 0) - λtot(T = T2, x = 0) = λ(T1)F(r(0), ϕ(0), T1) - λ(T2)F(r(0), ϕ(0), T2)
d2) $\begin{matrix}{λ}_{tot} \left(T=\frac{3 {T}_{1} + {T}_{2}}{4},x=\frac{1}{4}\right) - {λ}_{tot} \left(T=\frac{3 {T}_{2} + {T}_{1}}{4},x=\frac{1}{4}\right) = \\ λ \left(\frac{3 {T}_{1} + {T}_{2}}{4}\right) F \left(r\left(\frac{1}{4}\right),ϕ\left(\frac{1}{4}\right),\frac{3 {T}_{1} + {T}_{2}}{4}\right) - λ \left(\frac{3 {T}_{2} + {T}_{1}}{4}\right) F \left(r\left(\frac{1}{4}\right),ϕ\left(\frac{1}{4}\right),\frac{3 {T}_{2} + {T}_{1}}{4}\right)\end{matrix}$
d3) $\begin{matrix}{λ}_{tot} \left(T=\frac{3 {T}_{2} + {T}_{1}}{4},x=\frac{3}{4}\right) - {λ}_{tot} \left(T=\frac{3 {T}_{1} + {T}_{2}}{4},x=\frac{3}{4}\right) = \\ λ \left(\frac{3 {T}_{2} + {T}_{1}}{4}\right) F \left(r\left(\frac{3}{4}\right),ϕ\left(\frac{3}{4}\right),\frac{3 {T}_{2} + {T}_{1}}{4}\right) - λ \left(\frac{3 {T}_{1} + {T}_{2}}{4}\right) F \left(r\left(\frac{3}{4}\right),ϕ\left(\frac{3}{4}\right),\frac{3 {T}_{1} + {T}_{2}}{4}\right)\end{matrix}$
d4) 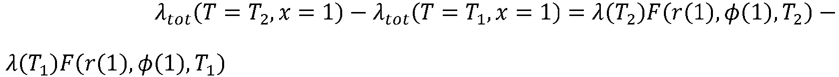 λtot(T = T2, x = 1) - λtot(T = T1, x = 1) = λ(T2)F(r(1), ϕ(1), T2) - λ(T1)F(r(1), ϕ(1), T1)
e) für jede der Gleichungen d1) und d4), Finden der Werte der entsprechenden Paare (r(0), *ϕ*(0)), *(r(1), ϕ*(1)), die den Betrag der Differenzen maximieren;
f) für die Gleichung d2), Auswählen der Werte von (r(0,25), *ϕ*(0,25)), so dass die Differenz in d2) das k-Fache der Differenz in d1) ist, wobei k zwischen 0,3 und 0,7 liegt;
g) für die Gleichung d3), Auswählen der Werte von (r(0,75), *ϕ*(0,75)), so dass die Differenz in d3) das k-Fache der Differenz in d4) ist, wobei k zwischen 0,3 und 0,7 liegt;
wodurch insbesondere mittels der Schritte e), f) und g) die Werte von r(x) und *ϕ(x)* an den Punkten mit einer Abszisse x = 0, $x = \frac{1}{4} , x = \frac{3}{4}$, *x* = 1 erhalten werden;
h) Durchführen einer linearen Interpolation der Werte von r(x) und *ϕ*(*x*) an den Punkten mit der Abszisse x = 0, $x = \frac{1}{4} , x = \frac{3}{4}$, *x* = 1, um den Verlauf der Porosität *Φ* und des Radius r der Poren (3) entlang der Abszisse x zu erhalten.

2. Verfahren nach Anspruch 1, wobei x=0 der Position des ersten Endes (21) des Körpers (2) entspricht und x=1 der Position des zweiten Endes (22) des Körpers (2) entspricht.

3. Verfahren nach Anspruch 1 oder 2, wobei die Ergebnisse der Differenzen in d1), d2), d3) und d4) das gleiche Vorzeichen aufweisen, insbesondere wobei die Ergebnisse der Differenzen alle positiv oder alle negativ sind.

4. Verfahren nach einem der vorhergehenden Ansprüche, wobei die Abhängigkeit von *l(T)* von der Temperatur T, insbesondere wenn der Körper (2) aus einem Halbleitermaterial besteht, wie folgt ausgedrückt wird: $l = {β}_{0} \frac{{\int }_{0}^{\frac{{θ}_{D}}{T}} \frac{{x}^{4} {e}^{x}}{{\left({e}^{x}-1\right)}^{2} \left({A}_{1}{x}^{4}{T}^{4}+{A}_{2}{x}^{2}{T}^{5}+{A}_{3}\right)}}{{\int }_{0}^{\frac{{θ}_{D}}{T}} \frac{{x}^{4} {e}^{x}}{{\left({e}^{x}-1\right)}^{2}}}$ wobei *θ_{D}* die Debye-Temperatur des Materials ist, aus dem der Körper (2) besteht, und βo, A₁, A₂ und A₃ für das Material charakteristische konstante Werte sind.

5. Verfahren nach einem der vorhergehenden Ansprüche, wobei der Körper (2) aus einem kristallinen Halbleitermaterial besteht, insbesondere porös; oder aus einem Metall, insbesondere porös.

6. Verfahren nach einem der vorhergehenden Ansprüche, wobei der Körper (2) aus Aluminiumnitrid besteht.

7. Verfahren nach einem der vorhergehenden Ansprüche, wobei der Wert T₁ gleich 300 K ist und der Wert T₂ gleich 100 K ist.

8. Thermische Gleichrichtervorrichtung (1), umfassend einen Körper (2) mit einem ersten Ende (21) und einem zweiten Ende (22), die einander gegenüberliegen;
wobei der Körper (2) eine Vielzahl von Poren (3) aufweist, so dass der Körper (2) eine Porosität *Φ* in einem Bereich des Körpers (2) aufweist, wobei die Porosität *Φ* als das Verhältnis des Gesamtvolumens der Poren (3) in dem Bereich zu dem Gesamtvolumen des Bereichs definiert ist;
wobei der Verlauf der Porosität *Φ* und des Radius r der Poren (3) gemäß dem Verfahren nach einem der vorhergehenden Ansprüche bestimmt wird.

9. Thermische Gleichrichtervorrichtung (1) nach Anspruch 8, mit einem Gleichrichtungskoeffizienten R größer als 1, vorzugsweise größer als oder gleich 2;
wobei der Gleichrichtungskoeffizient R ist: $R = \frac{\left|{q}_{d}\right|}{\left|{q}_{r}\right|}$
wobei q_{d} der Wärmefluss zwischen den zwei Enden (21, 22) des Körpers (2) ist, wenn das erste Ende (21) die Temperatur T1 aufweist und das zweite Ende (22) die Temperatur T2 aufweist,
und qᵣ der Wärmefluss zwischen den zwei Enden (21, 22) des Körpers (2) ist, wenn das erste Ende (21) die Temperatur T2 aufweist und das zweite Ende (22) die Temperatur T1 aufweist.

10. Thermische Gleichrichtervorrichtung (1) nach Anspruch 8 oder 9, wobei der Körper (2) aus Aluminiumnitrid besteht.

## Revendications

1. Procédé de fabrication d'un dispositif redresseur thermique (1) comprenant un corps (2) présentant une première extrémité (21) et une deuxième extrémité (22), opposées l'une à l'autre ;
dans lequel le procédé comprend la création d'une pluralité de pores (3) dans le corps (2), de sorte que le corps (2) présente une porosité *Φ* dans une région du corps (2), la porosité *Φ* étant définie comme le rapport entre le volume total des pores (3) dans ladite région et le volume total de la région,
le procédé étant **caractérisé en ce que** l'évolution de la porosité *Φ* et du rayon r des pores (3) est déterminée comme suit :
a) en sélectionnant une première valeur de température **T1** et une deuxième valeur de température T2, avec **T1** > T2, chacune devant être appliquée à l'une respective desdites extrémités (21, 22) du corps (2) ;
b) en traçant un rectangle sur un plan T-x, où T est l'axe des ordonnées et x l'axe des abscisses ;
les sommets dudit rectangle ayant les coordonnées suivantes : $\left(T={T}_{1}, x=0\right) , \left(T={T}_{2}, x=0\right) , \left(T={T}_{1}, x=1\right) , \left(T={T}_{2}, x=1\right) ;$
c) en considérant la formule de conductivité thermique suivante : *λₜₒₜ = λ*(*T*)*F*(*r, ϕ,* T), où *λ*(*T*) représente la conductivité thermique en fonction de la température T du matériau dont est constitué le corps (2), en l'absence de ladite pluralité de pores (3) ;
et F est un facteur de correction dû à la présence de ladite pluralité de pores (3), dans lequel $F = \frac{1}{\frac{1}{{\left(1-ϕ\right)}^{3}} + \frac{9}{2} {\left(\frac{l \left(T\right)}{r}\right)}^{2} ϕ \left(1+3\sqrt{\frac{ϕ}{2}}\right)}$
où *l(T)* est un facteur qui dépend uniquement de la température ;
d) à l'aide de la formule de conductivité susmentionnée *λₜₒₜ*, en calculant les différences suivantes de conductivité thermique, *r* et *Φ* étant fonction de x :
d1) 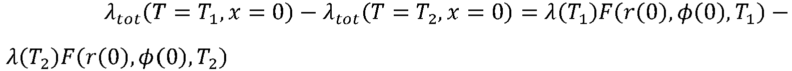 λtot(T = T1, x = 0) - λtot(T = T2, x = 0) = λ(T1)F(r(0), ϕ(0), T1) - λ(T2)F(r(0), ϕ(0), T2)
d2) $\begin{matrix}{λ}_{tot} \left(T=\frac{3 {T}_{1} + {T}_{2}}{4},x=\frac{1}{4}\right) - {λ}_{tot} \left(T=\frac{3 {T}_{2} + {T}_{1}}{4},x=\frac{1}{4}\right) = \\ λ \left(\frac{3 {T}_{1} + {T}_{2}}{4}\right) F \left(r\left(\frac{1}{4}\right),ϕ\left(\frac{1}{4}\right),\frac{3 {T}_{1} + {T}_{2}}{4}\right) - λ \left(\frac{3 {T}_{2} + {T}_{1}}{4}\right) F \left(r\left(\frac{1}{4}\right),ϕ\left(\frac{1}{4}\right),\frac{3 {T}_{2} + {T}_{1}}{4}\right)\end{matrix}$
d3) $\begin{matrix}{λ}_{tot} \left(T=\frac{3 {T}_{2} + {T}_{1}}{4},x=\frac{3}{4}\right) - {λ}_{tot} \left(T=\frac{3 {T}_{1} + {T}_{2}}{4},x=\frac{3}{4}\right) = \\ λ \left(\frac{3 {T}_{2} + {T}_{1}}{4}\right) F \left(r\left(\frac{3}{4}\right),ϕ\left(\frac{3}{4}\right),\frac{3 {T}_{2} + {T}_{1}}{4}\right) - λ \left(\frac{3 {T}_{1} + {T}_{2}}{4}\right) F \left(r\left(\frac{3}{4}\right),ϕ\left(\frac{3}{4}\right),\frac{3 {T}_{1} + {T}_{2}}{4}\right)\end{matrix}$
d4) 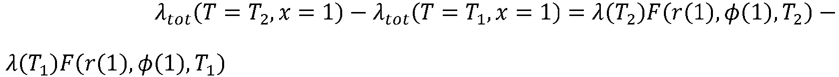 λtot(T = T2, x = 1) - λtot(T = T1, x = 1) = λ(T2)F(r(1), ϕ(1), T2) - λ(T1)F(r(1), ϕ(1), T1)
e) pour chacune des équations d1) et d4), en déterminant les valeurs des paires correspondantes (*r*(0), *ϕ*(0)), (r(1), *ϕ*(1)), qui maximisent le module des différences ;
f) pour l'équation d2), en sélectionnant les valeurs de (*r*(0,25), *ϕ*(0,25)) de sorte que la différence dans d2) soit égale à k fois la différence dans d1), où k est compris entre 0,3 et 0,7 ;
g) pour l'équation d3), en sélectionnant les valeurs de (*r*(0,75), *ϕ*(0,75)) de sorte que la différence dans d3) soit égale à k fois la différence dans d4), où k est compris entre 0,3 et 0,7 ;
ce qui permet, notamment grâce aux étapes e), f) et g), d'obtenir les valeurs de *r(x)* et *ϕ(x)* aux points dont l'abscisse est x = *0,* $x = \frac{1}{4} , x = \frac{3}{4}$, *x* = 1;
h) en effectuant une interpolation linéaire desdites valeurs de *r(x)* et *ϕ*(*x*) aux points dont l'abscisse est x = 0, $x = \frac{1}{4} , x = \frac{3}{4}$, *x* = 1,, afin d'obtenir l'évolution de la porosité *Φ* et du rayon r des pores (3) le long de l'abscisse x.

2. Procédé selon la revendication 1, dans lequel x = 0 correspond à la position de la première extrémité (21) du corps (2), et x = 1 correspond à la position de la deuxième extrémité (22) du corps (2).

3. Procédé selon la revendication 1 ou 2, dans lequel les résultats des différences de d1), d2), d3) et d4) ont le même signe, en particulier dans lequel les résultats desdites différences sont tous positifs ou tous négatifs.

4. Procédé selon l'une quelconque des revendications précédentes, dans lequel la dépendance de *l*(*T*) par rapport à la température T, en particulier lorsque le corps (2) est constitué d'un matériau semi-conducteur, s'exprime comme suit : $l = {β}_{0} \frac{{\int }_{0}^{\frac{{θ}_{D}}{T}} \frac{{x}^{4} {e}^{x}}{{\left({e}^{x}-1\right)}^{2} \left({A}_{1}{x}^{4}{T}^{4}+{A}_{2}{x}^{2}{T}^{5}+{A}_{3}\right)}}{{\int }_{0}^{\frac{{θ}_{D}}{T}} \frac{{x}^{4} {e}^{x}}{{\left({e}^{x}-1\right)}^{2}}}$ où *θ_{D}* est la température de Debye du matériau dont est constitué le corps (2), et β₀, A₁, A₂ et A₃ sont des valeurs constantes caractéristiques dudit matériau.

5. Procédé selon l'une quelconque des revendications précédentes, dans lequel ledit corps (2) est constitué d'un matériau semi-conducteur cristallin, en particulier poreux ; ou d'un métal, en particulier poreux.

6. Procédé selon l'une quelconque des revendications précédentes, dans lequel ledit corps (2) est constitué de nitrure d'aluminium.

7. Procédé selon l'une quelconque des revendications précédentes, dans lequel ladite valeur T₁ est égale à 300 K et ladite valeur T₂ est égale à 100 K.

8. Dispositif redresseur thermique (1) comprenant un corps (2) présentant une première extrémité (21) et une deuxième extrémité (22), opposées l'une à l'autre ;
dans lequel le corps (2) comporte une pluralité de pores (3), de sorte que le corps (2) présente une porosité *Φ* dans une région du corps (2), la porosité *Φ* étant définie comme le rapport entre le volume total des pores (3) dans ladite région et le volume total de la région ;
dans lequel l'évolution de la porosité *Φ* et du rayon r des pores (3) est déterminée conformément au procédé selon l'une quelconque des revendications précédentes.

9. Dispositif redresseur thermique (1) selon la revendication 8, présentant un coefficient de redressement R supérieur à 1, de préférence supérieur ou égal à 2 ;
le coefficient de redressement R étant : $R = \frac{\left|{q}_{d}\right|}{\left|{q}_{r}\right|}$
où q_{d} est le flux thermique entre les deux extrémités (21, 22) du corps (2) lorsque la première extrémité (21) est à la température T1 et la deuxième extrémité (22) à la température T2,
et qᵣ est le flux thermique entre les deux extrémités (21, 22) du corps (2) lorsque la première extrémité (21) est à la température T2 et la deuxième extrémité (22) à la température T1.

10. Dispositif redresseur thermique (1) selon la revendication 8 ou 9, dans lequel ledit corps (2) est constitué de nitrure d'aluminium.
